(19) Europäisches Patentamt / European Patent Office / Office européen des brevets

(11) **EP 4 394 986 B1**

(12) **EUROPEAN PATENT SPECIFICATION**


(45) Date of publication and mention of the grant of the patent:
**26.08.2026 Bulletin 2026/35**

(21) Application number: **22876111.0**

(22) Date of filing: **26.09.2022**

(51) International Patent Classification (IPC):
***H01M 10/0567*** *(2010.01)* ***H01G 9/00*** *(2006.01)*
***H01G 9/035*** *(2006.01)* ***H01G 11/60*** *(2013.01)*
***H01G 11/62*** *(2013.01)* ***H01G 11/64*** *(2013.01)*
***H01G 11/84*** *(2013.01)* ***H01M 6/16*** *(2006.01)*
***H01M 8/1016*** *(2016.01)* ***H01M 10/052*** *(2010.01)*
***H01M 10/0568*** *(2010.01)* ***H01M 10/0569*** *(2010.01)*
***H01M 10/0525*** *(2010.01)*

(52) Cooperative Patent Classification (CPC):
**H01G 9/035; H01G 11/60; H01G 11/62; H01G 11/64; H01G 11/84; H01M 10/0525; H01M 10/0569;** Y02E 60/10

(86) International application number:
**PCT/JP2022/035646**

(87) International publication number:
**WO 2023/054244 (06.04.2023 Gazette 2023/14)**


(54) **NONAQUEOUS ELECTROLYTE SOLUTION AND METHOD FOR STORING SAME**
NICHTWÄSSRIGE ELEKTROLYTLÖSUNG UND VERFAHREN ZUR LAGERUNG DIESER
SOLUTION ÉLECTROLYTIQUE NON AQUEUSE ET SON PROCÉDÉ DE STOCKAGE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2021 JP 2021159576**

(43) Date of publication of application:
**03.07.2024 Bulletin 2024/27**



(73) Proprietor: **Nippon Shokubai Co., Ltd.**
**Osaka-shi, Osaka 541-0043 (JP)**

(72) Inventors:
- **OOKUBO, Chie**
  **Suita-shi, Osaka 564-0034 (JP)**
- **KOBATAKE, Takayuki**
  **Suita-shi, Osaka 564-0034 (JP)**
- **ARAKAWA, Motohiro**
  **Suita-shi, Osaka 564-0034 (JP)**
- **MINAMI, Hiroko**
  **Suita-shi, Osaka 564-0034 (JP)**

(74) Representative: **Germain Maureau**
**12, rue Boileau**
**69006 Lyon (FR)**



(56) References cited:
**WO-A1-2020/090922** **WO-A1-2020/090922**
**WO-A1-2020/100115** **CN-A- 109 119 598**
**CN-A- 109 119 598** **JP-A- 2011 060 444**
**JP-A- 2016 134 283** **JP-A- 2018 170 110**
**JP-A- 2018 170 110** **JP-A- 2019 160 723**
**JP-A- 2019 160 723** **US-A1- 2018 269 530**
**US-A1- 2018 269 549**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present disclosure relates to a non-aqueous electrolyte solution and a method for storing the same.

BACKGROUND ART

In general, a non-aqueous electrolyte solution used in a secondary battery such as a lithium ion secondary battery greatly affects battery performance when its characteristics vary due to deterioration during storage. Thus, various types of non-aqueous electrolyte solutions capable of improving battery characteristics such as safety, stability, and storage characteristics have been studied.

For example, Patent Document 1 proposes a non-aqueous electrolyte solution for a secondary battery, containing a fluorine-containing lithium salt mixed with a non-aqueous solvent, a predetermined content of hydrofluoric acid (HF), and lithium difluorophosphate as a specific compound in a predetermined ratio. In this electrolyte solution, a non-aqueous solvent containing 3 ppm or more and 150 ppm or less (specifically, 10 ppm or more and 50 ppm or less) of alcohols is used (e.g., alcohol is added to a purified non-aqueous solvent) to improve output characteristics, high-temperature storage characteristics, and cycle characteristics of the battery.

Patent Document 2 proposes an electrolyte solution for a non-aqueous lithium secondary battery containing a room temperature molten salt, a lithium salt, and a compound having a hydroxyl group. This electrolyte solution has been found to achieve excellent current efficiency by containing alcohol as the compound having the hydroxyl group in a content of 30 ppm to 10000 ppm (in particular, 800 ppm) relative to the weight of the electrolyte solution.

Patent Document 3 proposes an electrolyte solution for a non-aqueous electrolytic secondary battery containing a lithium salt, methyl acetate, and dimethyl sulfone. This electrolyte solution can provide a high capacity battery having excellent high-temperature storage characteristics. Patent Document 3 also proposes an electrolyte solution further containing alcohol as an additive in a content of 5 ppm or more and 500 ppm or less relative to the mass of the electrolyte solution.

Patent Document 4 proposes an electrolyte solution containing a lithium salt, an additive, and a solvent as the remainder, and a p-benzoquinone derivative is used as the additive. Patent Document 5 proposes a non-aqueous electrolyte solution containing hydroquinone or a hydroquinone derivative.

Patent Document 6 proposes a non-aqueous electrolyte solution containing a specific anion, a lithium cation, and 4 mass% or less of a radical scavenger and/or a redox stabilizer.

CITATION LIST

PATENT DOCUMENTS

Patent Document 1: Japanese Unexamined Patent Publication No. 2007-165294
Patent Document 2: International Publication WO2006/057447
Patent Document 3: International Publication No. WO2020/241438
Patent Document 4: Japanese Unexamined Patent Publication No. 2019-114346
Patent Document 5: Japanese Unexamined Patent Publication No. H08-203561
Patent Document 6: Japanese Unexamined Patent Publication No. 2016-134283

SUMMARY OF THE INVENTION

TECHNICAL PROBLEM

Based on the studies so far, the applicant has found that a non-aqueous electrolyte solution containing a lithium salt such as lithium bis(fluorosulfonyl)imide as an electrolyte improves performance of a lithium ion secondary battery such as high-temperature durability and charge-discharge cycle characteristics. The present inventors have also made various proposals for the non-aqueous electrolyte solution containing the sulfonylimide compound and improved in storage stability of itself (the property of reducing the decomposition reaction of the sulfonylimide compound during long-term storage) and a method of storing the non-aqueous electrolyte solution.

Although Patent Documents 1 to 3 have discussed the safety, stability, and storage characteristics of the batteries, they are silent on the storage stability of the electrolyte solution itself and a method of storing the electrolyte

solution.

Patent Documents 1 and 2 have not discussed an electrolyte solution containing a sulfonylimide compound. Patent Document 3 have not made a specific study of an electrolyte solution containing alcohol as an additive, and it is unclear whether the proposed advantages are obtained.

Although Patent Documents 4 and 5 have studied batteries containing hydroquinone or a hydroquinone derivative as an additive, no specific consideration has been made on an electrolyte solution containing a sulfonylimide compound.

Patent Document 6 discloses that a non-aqueous electrolyte solution containing a phenolic antioxidant reduces the decomposition of a compound having a sulfonylimide anion at high temperature. However, Patent Document 6 has actually been focused on a non-aqueous electrolyte solution containing 1.0 mol/L lithium bis(fluorosulfonyl)imide as the compound, and no consideration has been made on a non-aqueous electrolyte solution containing the compound at a higher concentration.

The present disclosure has been made in view of the above circumstances, and an object of the present disclosure is to improve storage stability of a non-aqueous electrolyte solution containing a sulfonylimide compound at a relatively high concentration.

## SOLUTION TO THE PROBLEM

In order to achieve the above object, the disclosed technique has found that decomposition of a sulfonylimide compound is reduced by intentionally adding a compound containing a hydroxyl (hydroxy) group (hereinafter also referred to as a "hydroxyl group-containing compound") to a non-aqueous electrolyte solution containing a sulfonylimide compound at a relatively high concentration (e.g., more than 1.5 mol/L) and specifying the contents of the sulfonylimide compound and the hydroxyl group-containing compound. The present disclosure is specifically described below. The invention is as defined in independent claim 1.

The present disclosure is directed to a non-aqueous electrolyte solution containing a sulfonylimide compound represented by the general formula (1):

> $LiN(RSO_2)(FSO_2)$ (where R represents a fluorine atom, an alkyl group with 1 to 6 carbon atoms, or a fluoroalkyl group with 1 to 6 carbon atoms) (1)
> and at least one hydroxyl group-containing compound selected from the group consisting of alcohol and a phenolic hydroxyl group-containing compound, wherein the non-aqueous electrolyte solution contains more than 1.5 mol/L of the sulfonylimide compound represented by the general formula (1) and 40 ppm by mass or more and 1000 ppm by mass or less of the hydroxyl group-containing compound relative to the sulfonylimide compound represented by the general formula (1). The non-aqueous electrolyte solution may contain acid at a concentration of 50 ppm by mass or less. The sulfonylimide compound represented by the general formula (1) may contain $LiN(FSO_2)_2$. The alcohol includes at least one selected from the group consisting of aliphatic monoalcohol with 1 to 4 carbon atoms and aliphatic dialcohol with 1 to 4 carbon atoms. The phenolic hydroxyl group-containing compound may include at least one selected from the group consisting of hydroquinone and dibutylhydroxytoluene. The non-aqueous electrolyte solution may further contain at least one selected from the group consisting of a carbonate solvent, a lactone solvent, an ether solvent, and a chain ester solvent as an electrolyte solution solvent.

The present disclosure is directed to a method for storing the non-aqueous electrolyte solution in a container. In the storage method, the non-aqueous electrolyte solution may contain acid at a concentration of 50 ppm by mass or less after storage at room temperature or higher for three months or longer.

The present disclosure is further directed to a secondary battery using the non-aqueous electrolyte solution.

## ADVANTAGES OF THE INVENTION

The present disclosure can improve storage stability of a non-aqueous electrolyte solution containing a sulfonylimide compound at a relatively high concentration.

## DESCRIPTION OF EMBODIMENTS

Embodiments will be described in detail below. The following description of preferred embodiments is merely an example in nature and is not intended to limit the scope, applications, or use of the present disclosure.

<Non-Aqueous Electrolyte Solution>

A non-aqueous electrolyte solution of the present embodiment contains a lithium salt such as a specific sulfonylimide compound as an electrolyte and a hydroxyl group-containing compound as an additive (hereinafter also referred to as a "sulfonylimide electrolyte solution").

(Electrolyte)

The electrolyte contained in the sulfonylimide electrolyte solution contains a sulfonylimide compound represented by the general formula (1):

[Chemical 1] $LiN(RSO_2)(FSO_2)$ (1)

(hereinafter referred to as a "sulfonylimide compound (1)", a fluorine-containing sulfonylimide salt).

In the general formula (1), R represents a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include one obtained by substituting some or all of hydrogen atoms contained in an alkyl group with 1 to 6 carbon atoms with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. The fluoroalkyl group may particularly be a perfluoroalkyl group.

As the substituent R, a fluorine atom and a perfluoroalkyl group (e.g., a perfluoroalkyl group with 1 to 6 carbon atoms, such as a trifluoromethyl group, a pentafluoroethyl group, and a heptafluoropropyl group) are preferable. Among them, the fluorine atom, the trifluoromethyl group, and the pentafluoroethyl group are more preferable, the fluorine atom and the trifluoromethyl group are yet more preferable, and the fluorine atom is still more preferable.

Specific examples of the sulfonylimide compound (1) include lithium bis(fluorosulfonyl)imide ($LiN(FSO_2)_2$, LiFSI), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, and lithium (fluorosulfonyl)(heptafluoropropylsulfonyl)imide. As the sulfonylimide compound (1), these compounds may be used alone or in combination of two or more thereof. As the sulfonylimide compound (1), a commercially available product may be used, or one synthesized by any known method may also be used.

Among the examples of the sulfonylimide compound (1), lithium bis(fluorosulfonyl)imide, lithium (fluorosulfonyl)(trifluoromethylsulfonyl)imide, and lithium(fluorosulfonyl)(pentafluoroethylsulfonyl)imide are preferable, and lithium bis(fluorosulfonyl)imide is more preferable, in view of improving battery performance. In other words, the sulfonylimide compound (1) preferably contains $LiN(FSO_2)_2$.

It is only required that the electrolyte (lithium salt) contains the sulfonylimide compound (1), but the electrolyte may also contain another electrolyte (an electrolyte other than the sulfonylimide compound (1)). Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include a non-lithium salt of fluorine-containing sulfonylimide listed above as the sulfonylimide compound (1) (e.g., a salt obtained by substituting lithium (ion) in the sulfonylimide compound (1) with a cation other than the lithium ion). Examples of the salt substituted with cations other than the lithium ions include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more of them. Alternatively, as the other sulfonylimide compound, a commercially available product may be used, or one obtained by synthesis using a known method may also be used.

Examples of the non-imide salt include a salt of a non-imide-based anion and a cation (lithium ions and the cations shown above as examples). Examples of the non-imide salt include a compound represented by the general formula (2):

[Chemical 2]

$LiPF_a(C_mF_{2m+1})_{6-a}$ (2)

(where $0 \leq a \leq 6$ and $1 \leq m \leq 4$),
(hereinafter referred to as a "fluorophosphoric acid compound (2)"), a compound represented by the general formula (3):
[Chemical 3]

$$LiBF_3(C_nF_{2n+1})_{4-b} \qquad (3)$$

(where $0 \leq b \leq 4$ and $1 \leq n \leq 4$),
(hereinafter referred to as a "fluoroboric acid compound (3)"), lithium salts such as lithium hexafluoroarsenate ($LiAsF_6$), $LiSbF_6$, $LiClO_4$, LiSCN, $LiAlF_4$, $CF_3SO_3Li$, $LiC[(CF_3SO_2)_3]$, $LiN(NO_2)$, and $LiN[(CN)_2]$, and non-lithium salts (e.g., salts obtained by substituting a lithium (ion) with the above-described cation in these lithium salts, such as $NaBF_4$, $NaPF_6$, and $NaPF_3(CF_3)_3$). These non-imide salts may be used alone or in combination of two or more of them. Alternatively, as the non-imide salt, a commercially available product may be used, or one obtained by synthesis using a known method may also be used.

Among the other electrolytes, the non-imide salts are preferable in view of ion conductivity and costs. Among them, the fluorophosphoric acid compound (2), the fluoroboric acid compound (3), and $LiAsF_6$ are preferable, and the fluorophosphoric acid compound (2) is more preferable.

Examples of the fluorophosphoric acid compound (2) include $LiPF_6$, $LiPF_3(CF_3)_3$, $LiPF_3(C_2F_5)_3$, $LiPF_3(C_3F_7)_3$, and $LiPF_3(C_4F_9)_3$. Among the examples of the fluorophosphoric acid compound (2), $LiPF_6$ or $LiPF_3(C_2F_5)_3$ is preferable, and $LiPF_6$ is more preferable.

Examples of the fluoroboric acid compound (3) include $LiBF_4$, $LiBF(CF_3)_3$, $LiBF(C_2F_5)_3$, and $LiBF(C_3F_7)_3$. Among the examples of the fluoroboric acid compound (3), $LiBF_4$ or $LiBF(CF_3)_3$ is preferable, and $LiBF_4$ is more preferable.

These electrolytes (the sulfonylimide compound (1) and the other electrolytes) may be present (contained) in the ionic form in the non-aqueous electrolyte solution.

The content (concentration) of the sulfonylimide compound (1) in the non-aqueous electrolyte solution (the total content when two or more compounds are used together, the same applies hereinafter) is more than 1.5 mol/L, preferably more than 2 mol/L, more preferably 2.5 mol/L or more, yet more preferably 2.8 mol/L or more, in view of improving the storage stability of the sulfonylimide electrolyte solution itself. The concentration is preferably 5 mol/L or less, more preferably 4 mol/L or less, yet more preferably 3.5 mol/L or less, in view of keeping the battery performance from decreasing due to the increase in viscosity of the electrolyte solution.

The content of the sulfonylimide compound (1) in the non-aqueous electrolyte solution is 50 mol% or more relative to the total of 100 mol% of the electrolyte contained in the non-aqueous electrolyte solution, and the upper limit is 100 mol%, in view of improving the storage stability of the sulfonylimide electrolyte solution itself. Specifically, the electrolyte may contain the sulfonylimide compound (1) alone.

The content of the sulfonylimide compound (1) in the non-aqueous electrolyte solution is preferably 25 mass% or more, more preferably 30 mass% or more, yet more preferably 35 mass% relative to the whole non-aqueous electrolyte solution (the total of 100 mass% of the components in the non-aqueous electrolyte solution), in view of improving the storage stability of the sulfonylimide electrolyte solution itself. The concentration is preferably 70 mass% or less, more preferably 60 mass% or less, yet more preferably 50 mass% or less, in view of keeping the battery performance from decreasing due to the increase in viscosity of the electrolyte solution. For example, in a solution dissolving LiFSI as the sulfonylimide compound (1) at a concentration of 2 mol/L in dimethyl carbonate (DMC) as an electrolyte solution solvent to be described later (non-aqueous electrolyte solution), the content of LiFSI is $[2 \text{ (mol/L)} \times 187.06 \text{ (molecular weight of LiFSI)}/\{1.27 \text{ (solution density)} \times 1000\}] \times 100 \approx 30$ mass%. In other words, the non-aqueous electrolyte solution is a 30 mass% LiFSI/70 mass% DMC solution. Likewise, a DMC solution containing 2.9 mol/L LiFSI is a 40 mass% LiFSI/60 mass% DMC solution. The solution density is a value depending on the type of the electrolyte solution solvent and the concentration of the sulfonylimide compound (1), and can be obtained by referring to, for example, "Superconcentrated electrolytes for a high-voltage lithium-ion battery" (NATURE COMMUNICATIONS | 7:12032 | DOI: 10.1038/ncomms12032).

The electrolyte may be an electrolyte salt of a simple salt composition containing the sulfonylimide compound (1) alone, or an electrolyte salt of a mixed salt composition containing the sulfonylimide compound (1) and other electrolyte. The electrolyte salt of the mixed salt composition is preferably an electrolyte salt of a mixed salt composition containing the sulfonylimide compound (1) and the fluorophosphoric acid compound (2), more preferably an electrolyte salt of a mixed salt composition containing $LiN(FSO_2)_2$ and $LiPF_6$.

When the electrolyte salt of the mixed salt composition containing the sulfonylimide compound (1) and the other electrolyte is used, the concentration of the other electrolyte in the non-aqueous electrolyte solution is preferably 0.1 mol/L or more, more preferably 0.2 mol/L or more, yet more preferably 0.5 mol/L or more, in view of improving the storage stability of the sulfonylimide electrolyte solution itself. The concentration is preferably 1.5 mol/L or less, more preferably 1 mol/L or less, yet more preferably 0.8 mol/L or less, in view of keeping the battery performance from decreasing due to the increase

in viscosity of the electrolyte solution.

The total concentration of the electrolytes in the non-aqueous electrolyte solution is preferably more than 1.5 mol/L, more preferably more than 2 mol/L, yet more preferably 2.5 mol/L or more, still more preferably 2.8 mol/L or more, in view of improving the storage stability of the sulfonylimide electrolyte solution itself. The concentration is preferably 5 mol/L or less, more preferably 4 mol/L or less, yet more preferably 3.5 mol/L or less, in view of keeping the battery performance from decreasing due to the increase in viscosity of the electrolyte solution.

In view of improving the storage stability of the sulfonylimide electrolyte solution itself, it is preferable to increase the concentration of the sulfonylimide compound (1). The ratio between the sulfonylimide compound (1) and the other electrolyte (a mole ratio between the concentration of the sulfonylimide compound and the concentration of the other electrolyte) is preferably 1:25 or more, more preferably 1:10 or more, yet more preferably 1:8 or more, still more preferably 1:5 or more, even more preferably 1:2 or more, particularly preferably 1:1 or more, and preferably 25:1 or less, more preferably 10:1 or less, much more preferably 5:1 or less, and yet more preferably 2:1 or less.

(Hydroxyl Group-Containing Compound)

The hydroxyl group-containing compound is contained as an additive in the sulfonylimide electrolyte solution. In other words, the hydroxyl group-containing compound is an essential component that is intentionally added to the sulfonylimide electrolyte solution. The hydroxyl group-containing compound constituting the sulfonylimide electrolyte solution contains at least one selected from the group consisting of alcohol and a phenolic hydroxyl group-containing compound. In other words, the hydroxyl group-containing compound may contain the alcohol alone, may contain the phenolic hydroxyl group-containing compound alone, or may contain both of the alcohol and the phenolic hydroxyl group-containing compound.

[Alcohol]

In general, when alcohol is contained in the sulfonylimide electrolyte solution, sulfonylimide is decomposed by solvolysis. Thus, it is considered that the content of alcohol in the sulfonylimide electrolyte solution is preferably small. In this regard, the present inventors have found that the decomposition of the sulfonylimide compound (1) is reduced by specifying the content of the sulfonylimide compound (1) within the above-described range and specifying the content of the alcohol to the sulfonylimide compound (1) within the range described below. In the present embodiment, the sulfonylimide compound (1) and the alcohol are used in combination in specific contents, improving the storage stability of the sulfonylimide electrolyte solution itself for a long period of time (about three months) at a high temperature (about 40°C).

The alcohol is aliphatic alcohol including methyl alcohol (methanol), ethyl alcohol (ethanol), n-propyl alcohol, isopropyl alcohol, n-butyl alcohol, and t-butyl alcohol; diols (aliphatic dialcohols with 1 to 4 carbon atoms) such as ethylene glycol and propylene glycol. These alcohols may be used alone or in combination of two or more of them. Among the alcohols, methanol, ethanol, and ethylene glycol are more preferable, in view of improving the storage stability of the sulfonylimide electrolyte solution itself. In other words, the alcohol preferably contains at least one selected from the group consisting of the above-described preferred alcohols. Commercially available alcohols can be used.

[Phenolic Hydroxyl Group-Containing Compound]

The phenolic hydroxyl group-containing compound refers to phenols in which a hydrogen atom of an aromatic ring is substituted, and is distinguished from the alcohols described above. The present inventors have also found that the decomposition of the sulfonylimide compound (1) is reduced by specifying the content of the phenolic hydroxyl group-containing compound relative to the sulfonylimide compound (1) within the range described below. In the present embodiment, the sulfonylimide compound (1) and the phenolic hydroxyl group-containing compound are used in combination in specific contents, improving the storage stability of the sulfonylimide electrolyte solution itself for a long period of time (about three 3 months) at a high temperature (about 40°C).

The phenolic hydroxyl group-containing compound is not limited to a particular one, and examples thereof include hydroquinones, dibutylhydroxytoluene, alkoxyphenols, and bisphenols. Examples of the hydroquinones include hydroquinone, catechol, and resorcinol. Examples of the alkoxyphenols include 4-methoxyphenol. Examples of the bisphenols include bisphenol A and bisphenol B. The phenolic hydroxyl group-containing compounds may be used alone or in combination of two or more of them. Among the phenolic hydroxyl group-containing compounds, hydroquinone and dibutylhydroxytoluene are preferable in view of improving the storage stability of the sulfonylimide electrolyte solution itself. The phenolic hydroxyl group-containing compound may be a commercially available product.

The hydroxyl group-containing compound can be contained in the sulfonylimide electrolyte solution by, for example: adding the hydroxyl group-containing compound to the sulfonylimide electrolyte solution; preparing an

electrolyte solution solvent described later containing (by adding) the hydroxyl group-containing compound in advance and producing the sulfonylimide electrolyte solution using the obtained electrolyte solution solvent containing the hydroxyl group-containing compound. Alternatively, alcohol contained in a component used as a raw material of the sulfonylimide electrolyte solution may be used. For example, an alcohol-containing sulfonylimide compound (1) and/or an alcohol-containing electrolyte solution solvent are/is used as a raw material to produce the sulfonylimide electrolyte solution using the alcohol contained in the sulfonylimide compound (1) and/or the alcohol contained the electrolyte solution solvent. The alcohol contained in the sulfonylimide compound (1) refers to a production solvent used to produce the sulfonylimide compound (1) (a solvent remaining in the sulfonylimide compound (1) obtained by the known method). The remaining solvent refers to, for example, a solvent used in a reaction for production of the sulfonylimide compound (1) and a solvent used in purification. The above-mentioned methods may be combined.

The content of the hydroxyl group-containing compound relative to the sulfonylimide compound (1) (the total content when two or more hydroxyl group-containing compounds are used together) is 40 ppm by mass or more, preferably 50 ppm by mass or more, more preferably 100 ppm by mass or more, yet more preferably 180 ppm by mass or more, still more preferably 200 ppm by mass or more, particularly preferably 220 ppm by mass or more, in view of improving the storage stability of the sulfonylimide electrolyte solution itself. The upper limit of the content is 1000 ppm by mass or less, and preferably 500 ppm by mass or less, in view of keeping the battery performance from decreasing due to the hydroxyl group-containing compound. The content of the hydroxyl group-containing compound can be measured by a method described in the following examples, for example, head space gas chromatography or NMR.

The content of the hydroxyl group-containing compound in the non-aqueous electrolyte solution (relative to the mass of the non-aqueous electrolyte solution) is preferably 10 ppm by mass or more, more preferably 20 ppm by mass or more, yet more preferably 50 ppm by mass, in view of improving the storage stability of the sulfonylimide electrolyte solution itself. The upper limit of the content is preferably 500 ppm by mass or less, yet more preferably 200 ppm by mass or less, still more preferably 150 ppm by mass, in view of keeping the battery performance from decreasing due to the hydroxyl group-containing compound.

When a carbonate solvent described below is used as the electrolyte solution solvent, a trace amount of alcohol may be generated by hydrolysis derived from a carbonate compound. The alcohol generated in the process of producing the sulfonylimide electrolyte solution is also included in the content of the hydroxyl group-containing compound.

(Additive)

The non-aqueous electrolyte solution of the present embodiment may contain other additive than the hydroxyl group-containing compound for improving various characteristics of the lithium ion secondary battery. Examples of the additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as vinylene carbonate, fluoroethylene carbonate (FEC), trifluoropropylene carbonate, phenylethylene carbonate, and erythritan carbonate; sulfamic acid (amidosulfuric acid, $H_3NSO_3$); sulfamate salts (alkali metal salts such as lithium salts, sodium salts, and potassium salts; alkali earth metal salts such as calcium salts, strontium salts, and barium salts; other metal salts such as manganese salts, copper salts, zinc salts, iron salts, cobalt salts, and nickel salts; ammonium salts; and guanidine salts); fluorosulfonic acid compounds such as lithium fluorosulfonate ($LiFSO_3$), sodium fluorosulfonate ($NaFSO_3$), potassium fluorosulfonate ($KFSO_3$), and magnesium fluorosulfonate ($Mg(FSO_3)_2$); fluorophosphoric acid compounds such as lithium monofluorophosphate ($Li_2PO_3F$) and lithium difluorophosphate ($LiPO_2F_2$); and fluoro oxalate compounds such as lithium salts having an oxalate skeleton such as lithium bis(oxalato)borate (LiBOB), lithium difluoro(oxalato)borate (LiDFOB), lithium difluoro(oxalato)phosphate (LIDFOP), lithium tetrafluoro(oxalato)phosphate (LITFOP), lithium difluorobis(oxalato)phosphate (LiDFBOP), and lithium tris(oxalato)phosphate. These additives may be used alone or in combination of two or more of them.

The other additive is used preferably in a range of 0.1 mass% or more to 10 mass% or less, more preferably in a range of 0.2 mass% or more to 8 mass% or less, yet more preferably in a range of 0.3 mass% or more to 5 mass% or less, with respect to 100 mass% of the total amount of the components contained in the non-aqueous electrolyte solution. When the amount of the additive used is too small, it may be difficult for the additive to exhibit its effect. On the other hand, when the amount of the additive used is large, it is also difficult for the additive to exhibit its effect corresponding to the amount added, and the non-aqueous electrolyte solution may become more viscous, lowering the electrical conductivity.

(Electrolyte Solution Solvent)

The non-aqueous electrolyte solution of the present embodiment may contain an electrolyte solution solvent. In other words, the non-aqueous electrolyte solution may be a sulfonylimide electrolyte solution containing three components of the sulfonylimide compound (1), the hydroxyl group-containing compound, and the electrolyte solution solvent as essential components. In this case, the electrolyte solution solvent is a component different from the hydroxyl group-containing compound. The electrolyte solution solvent is not limited to a particular one as long as it can dissolve and disperse the electrolyte. Examples of the electrolyte solution solvent include non-aqueous solvents and media such as a polymer and polymer gel that can be a substitute for the electrolyte solution solvent. Any solvents that are generally used for batteries can be used.

Suitable examples of the non-aqueous solvents include a solvent that has a large dielectric constant and a boiling point of 60°C or higher, dissolves the electrolyte well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,5-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate (DMC), ethyl methyl carbonate (EMC), diethyl carbonate (DEC), diphenyl carbonate, and methylphenyl carbonate; saturated cyclic carbonate solvents such as ethylene carbonate (EC), propylene carbonate (PC), 2,3-dimethyl ethylene carbonate, 1,2-butylene carbonate, and erythritan carbonate; cyclic carbonate ester solvents having an unsaturated bond such as vinylene carbonate, methyl vinylene carbonate, ethyl vinylene carbonate, 2-vinyl ethylene carbonate, and phenylethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as $\gamma$-butyrolactone, $\gamma$-valerolactone, and $\delta$-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; 3-methyl-2-oxazolidinone; and chain ester solvents such as ethyl acetate, butyl acetate, and propyl propionate. These solvents may be used alone or in combination of two or more thereof.

Among the electrolyte solution solvents, the carbonate solvents such as the chain carbonate ester solvents and the cyclic carbonate ester solvents, the lactone solvents, the ether solvents, and the chain ester solvents are preferable, dimethyl carbonate, ethyl methyl carbonate, diethyl carbonate, ethylene carbonate, propylene carbonate, $\gamma$-butyrolactone, and $\gamma$-valerolactone are more preferable, the carbonate solvents such as dimethyl carbonate, ethyl methyl carbonate, diethyl carbonate, ethylene carbonate, and propylene carbonate are yet more preferable, and the chain carbonate solvents such as dimethyl carbonate, ethyl methyl carbonate, and diethyl carbonate are still more preferable. In other words, the electrolyte solution solvent preferably contains at least one selected from the group consisting of the above-described preferred solvents.

The polymer or the polymer gel can be used instead of the electrolyte solution solvent by the following method. Examples of the method include: a method of dropping a solution prepared by dissolving an electrolyte salt in a solvent onto a polymer film formed by a known method to impregnate the polymer film with the electrolyte salt and the non-aqueous solvent so that the polymer film supports the electrolyte salt and the non-aqueous solvent; a method of melting and mixing a polymer and an electrolyte salt at a temperature higher than the melting point of the polymer, forming the mixture into a film, and impregnating the film with a solvent (gel electrolytes are formed by these methods); a method of mixing a non-aqueous electrolyte solution prepared by dissolving an electrolyte salt in an organic solvent in advance with a polymer, forming the mixture into a film by casting or coating, and volatilizing the organic solvent; and a method of molding a mixture obtained by melting and mixing a polymer and an electrolyte salt at a temperature higher than the melting point of the polymer (intrinsic polymer electrolytes are formed by these methods).

Examples of the polymer used as a substitute for the electrolyte solution solvent include polyethylene oxide (PEO) that is a homopolymer or copolymer of an epoxy compound (such as ethylene oxide, propylene oxide, butylene oxide, and allyl glycidyl ether), polyether polymers such as polypropylene oxide, methacrylic polymers such as polymethylmethacrylate (PMMA), nitrile polymers such as polyacrylonitrile (PAN), fluorine polymers such as polyvinylidene fluoride (PVdF), polyvinylidene fluoride-hexafluoropropylene, and copolymers thereof. These polymers may be used alone or in combination of two or more of them.

(Conclusion)

The non-aqueous electrolyte solution of the present embodiment includes the sulfonylimide compound (1), the

hydroxyl group-containing compound, and optional components such as the other electrolyte, the electrolyte solution solvent, and the additive. The non-aqueous electrolyte solution can be prepared by, for example, mixing these components at a predetermined composition ratio.

A non-aqueous electrolyte solution of the present embodiment is a sulfonylimide electrolyte solution that contains more than 1.5 mol/l of the sulfonylimide compound (1) and a specific hydroxyl group-containing compound in a specific content (e.g., 40 ppm by mass or more and 1000 ppm by mass or less) relative to the sulfonylimide compound (1), and thus, reduces the decomposition of the sulfonylimide compound (1). This keeps an acid content such as HF from generating due to the decomposition of the sulfonylimide compound (1), and keeps the concentration of acid in the sulfonylimide electrolyte solution from increasing. Specifically, the concentration of acid (in terms of HF) in the sulfonylimide electrolyte solution is preferably 50 ppm by mass or less, more preferably 30 ppm by mass or less, yet more preferably 20 ppm by mass or less, still more preferably less than 10 ppm by mass, and even more preferably 8 ppm by mass or less. The acid content may be substantially absent (may be about 0 ppm by mass). The acid concentration can be measured by, for example, a method described in Examples below. The sulfonylimide electrolyte solution in which the acid concentration is reduced and maintained within the above range shows excellent storage stability by itself even at high temperature, and thus, stably maintains the component composition before and after storage at room temperature or higher for a certain period of time, as will be described below. The sulfonylimide electrolyte solution is less likely to deteriorate during the storage, which is advantageous in that a difference in battery performance is less likely to occur when the sulfonylimide electrolyte solutions stored for different periods are used.

<Method for Storing Non-Aqueous Electrolyte Solution>

A method for storing the non-aqueous electrolyte solution of the present embodiment is a method for storing the sulfonylimide electrolyte solution (hereinafter also referred to as a "target electrolyte solution") in a container.

(Container)

The container is preferably a sealed container. Preferably, the sealed container is made of a material and has a structure that are resistant to moisture contamination. More preferably, the sealed container is highly airtight so that the internal pressure of the container can be maintained. More preferably, the sealed container is hermetic (closed). The container can be made hermetic by, for example, providing a valve in part of the container.

The sealed container (or a part of the container to be in contact with the contents (the target electrolyte solution)) may be made of any material. Examples of the material include: metals such as stainless steel (e.g., SUS316), aluminum, aluminum alloys, and Hastelloy (registered trademark); fluorine-based resins such as tetrafluoroethylene-perfluoroalkyl vinyl ether copolymers (perfluoro alkoxyl alkane, PFA) and polytetrafluoroethylene (PTFE); olefin-based resins such as polyethylene (PE) and polypropylene (PP); and glass. Among these materials, stainless steel and PFA are preferable.

An inner surface of the sealed container made of the metal material described above may be coated with a resin. Any resin may be used for the coating, and fluorine-based resins (e.g., PTFE, PFA, and a tetrafluoroethylene-hexafluoropropylene copolymer (FEP)) and olefin-based resins (e.g., PP) are usable.

The sealed container may be a canister can, a plastic container, a container made of a fluorine-based resin, or a pouch-shaped container. The sealed container may include an inner resin bag and an outer metal casing.

The sealed container may have any shape, such as a bottle, a cylinder, an aluminum-lined paper carton, and an aluminum pouch.

The sealed container may have any volume, for example, about 100 L to 20000 L.

The volume of a liquid phase part [a part occupied by the contents (the target electrolyte solution)] of the sealed container and the volume of a gas phase part [a void (head space) other than the liquid phase part] preferably have a ratio (a space volume ratio) of 50% or less, more preferably 30% or less, still more preferably 15% or less, most preferably 10% or less, in view of filling efficiency of the target electrolyte solution. The lower limit of the space volume ratio is preferably 5% or more because the presence of the gas phase part allows addition of gas which will be described later.

After the sealed container is filled (charged) with the target electrolyte solution, the gas phase part (void) in the sealed container may be filled with a gas, if necessary. Examples of the gas include active gases such as air, oxygen ($O_2$), and carbon dioxide ($CO_2$), inert gases such as nitrogen ($N_2$) gas, helium (He) gas, and argon (Ar) gas, dry air (e.g., having a dew point of -60°C or lower), and a combination of these gases. The active gas, the inert gas, and the dry air can be generally commercially available products.

The temperature of the target electrolyte solution (the internal temperature of the sealed container during storage) is not limited to a particular value, and may be, for example, 60°C or lower (50°C or lower or 40°C or lower) and -40°C or higher (-30°C or higher, -20°C or higher, -10°C or higher, or 0°C or higher). Appropriate control of the temperature suppresses coagulation or decomposition of the target electrolyte solution.

The acid concentration (in terms of HF) in the non-aqueous electrolyte solution (sulfonylimide electrolyte

solution) after storage at room temperature or higher (e.g., 25°C or higher or high temperature (e.g., about 40°C), the same applies hereinafter) for three months or longer is preferably 50 ppm by mass or less, more preferably 30 ppm by mass or less, yet more preferably 20 ppm by mass or less, still more preferably less than 10 ppm by mass, even more preferably 8 ppm by mass or less. The acid content may be substantially absent (may be about 0 ppm by mass). The acid concentration can be measured by, for example, a method described in Examples below.

The moisture concentration in the non-aqueous electrolyte solution after storage at room temperature or higher for three months or longer is preferably 50 ppm by mass or less, more preferably 30 ppm by mass or less. The moisture content may be substantially absent (may be about 0 ppm by mass). The moisture concentration can be measured by a method described in Examples below, for example, a method using a Karl Fischer titrator.

The concentration of fluoride ions ($F^-$) in the non-aqueous electrolyte solution after storage at room temperature or higher for three months or longer is preferably 20 ppm by mass or less, more preferably 15 ppm by mass or less, yet more preferably 12 ppm by mass. The concentration of sulfate ions ($SO_4^{2-}$) in the non-aqueous electrolyte solution is preferably 25 ppm by mass or less, more preferably 10 ppm by mass or less, yet more preferably 5 ppm by mass or less. The fluoride ions and the sulfate ions may be substantially absent (may be about 0 ppm by mass). The ion concentrations of the fluoride ions and the sulfate ions can be measured by a method described in Examples below, for example, by ion chromatography.

The alcohol concentration relative to the sulfonylimide compound (1) in the non-aqueous electrolyte solution after storage at room temperature or higher for three months or longer is in the same numerical range as the alcohol content relative to the sulfonylimide compound (1) because the decomposition of the target electrolyte solution is reduced and the component composition is stably maintained during the storage.

<Applications>

The non-aqueous electrolyte solution described above and the non-aqueous electrolyte solution stored by the above-described storage method are used, for example, for a battery (a battery having a charge-discharge mechanism) and a power storage (electrochemical) device (or an ion conductive material constituting such a device). Specifically, the electrolyte solution can be used as an electrolyte solution constituting, for example, a primary battery, a secondary battery (e.g., a lithium (ion) secondary battery), a fuel battery, an electrolytic capacitor, an electric double layer capacitor, a solar battery, and an electrochromic display device. Hereinafter, the description will be made with reference to a battery (especially a secondary battery) as an example.

<Secondary Battery>

A secondary battery of the present embodiment includes a positive electrode, a negative electrode, and a non-aqueous electrolyte solution. **In** this secondary battery, the non-aqueous electrolyte solution of the present embodiment, i.e., the non-aqueous electrolyte solution containing the sulfonylimide compound (1) and the hydroxyl group-containing compound as essential components in specific contents, is used as the non-aqueous electrolyte solution. Use of the non-aqueous electrolyte solution of the present disclosure can improve the self-discharge capacity of the battery.

(Positive Electrode)

The positive electrode includes a positive electrode current collector and a positive electrode mixture layer formed on the positive electrode current collector and is usually in a sheet shape.

Examples of metal used for the positive electrode current collector include iron, copper, aluminum, nickel, stainless steel, titanium, tantalum, gold, and platinum. Among them, aluminum is preferable. The shape and size of the positive electrode current collector are not limited to particular ones.

The positive electrode mixture layer is made of a positive electrode mixture (a positive electrode composition). The positive electrode mixture contains components such as a positive electrode active material, a conductivity aid, a binder, and a solvent dispersing these components.

In the secondary battery of the present embodiment, the positive electrode (positive electrode mixture) used is suitably a ternary positive electrode active material such as $LiNi_{1/3}Co_{1/3}Mn_{1/3}O_2$, $LiNi_{0.5}Co_{0.2}Mn_{0.3}O_2$, $LiNi_{0.6}Co_{0.2}Mn_{0.2}O_2$, and $LiNi_{0.8}Co_{0.8}Mn_{0.1}O_2$ or an iron phosphate positive electrode active material having an olivine structure such as $LiFePO_4$ and $LiFe_{0.995}Mn_{0.005}PO_4$. These positive electrode active materials may be used alone or in combination of two or more of them.

The positive electrode preferably contains at least one of the ternary positive electrode active material or the iron phosphate positive electrode active material, but may further contain other positive electrode active material. The other positive electrode active material may be any material that can absorb and desorb lithium ions. For example, a positive electrode active material used in a known secondary battery (a lithium ion secondary battery) can be used.

Examples of the positive electrode active material used for the lithium ion secondary battery include: transition

metal oxides such as lithium cobalt oxide, lithium nickel oxide, lithium manganese oxide, and ternary oxides represented by $LiNi_{1-y-w}Co_vAl_wO_2$ ($0 \leq v \leq 1$, $0 \leq w \leq 1$) other than the ternary positive electrode active materials; compounds having an olivine structure such as $LiAPO_4$ (A represents Mn, Ni, or Co); solid solution materials incorporating two or more transition metals (such as a solid solution of electrochemically inactive layered $Li_2MnO_3$ and electrochemically active layered $LiMO_2$ (M represents a transition metal such as Co and Ni); $LiCo_xMn_{1-x}O_2$ ($0 \leq x \leq 1$); $LiNi_xMn_{1-x}O_2$ ($0 \leq x \leq 1$); compounds having a fluorinated olivine structure such as $Li_2APO_4F$ (A represents Fe, Mn, Ni, or Co); and sulfur. These may be used alone or in combination of two or more of them.

The content of the positive electrode active material (the total content if two or more positive electrode active materials are contained) is preferably 75 mass% or more, more preferably 85 mass% or more, yet more preferably 90 mass% or more, and preferably 99 mass% or less, more preferably 98 mass% or less, and yet more preferably 95 mass% or less, with respect to 100 mass% of the total amount of the components contained in the positive electrode mixture material, in view of improving the output characteristics and electrical characteristics of the secondary battery.

The conductivity aid is used to improve the output of the lithium ion secondary battery. Conductive carbon is mainly used as the conductivity aid. Examples of the conductive carbon include carbon black, fiber-like carbon, and graphite. These conductivity aids may be used alone or in combination of two or more of them. Among the conductivity aids, carbon black is preferable. Examples of the carbon black include Ketjen black and acetylene black. In the nonvolatile content of the positive electrode mixture, the conductivity aid is preferably contained in an amount of 1 mass% to 20 mass%, more preferably 1.5 mass% to 10 mass%, in view of improving the output characteristics and electrical characteristics of the lithium ion secondary battery.

Examples of the binder include: fluorine-based resins such as polyvinylidene fluoride and polytetrafluoroethylene; synthetic rubbers such as styrene-butadiene rubber and nitrile-butadiene rubber; polyamide-based resins such as polyamide-imide; polyolefin-based resins such as polyethylene and polypropylene; poly(meth)acrylic resins; polyacrylic acids; and cellulose-based resins such as carboxymethyl cellulose. The binders may be used alone or in combination of two or more of them. These binders may be dissolved or dispersed in a solvent in use.

Examples of the solvent include N-methylpyrrolidone, dimethylformamide, dimethylacetamide, methyl ethyl ketone, tetrahydrofuran, acetonitrile, acetone, ethanol, ethyl acetate, and water. These solvents may be used alone or in combination of two or more of them. The amount of the solvent used is not particularly limited, and may be determined, as appropriate, in accordance with the production method and the material used.

If necessary, the positive electrode mixture may also contain other component, for example: polymers including non-fluorine polymers such as a (meth)acrylic polymer, a nitrile polymer, and a diene polymer, and fluorine polymers such as polytetrafluoroethylene; an emulsifier such as an anionic emulsifier, a nonionic emulsifier, and a cationic emulsifier; dispersing agents including polymer dispersing agents such as a styrene-maleic acid copolymer and polyvinylpyrrolidone; a thickener such as carboxymethyl cellulose, hydroxyethyl cellulose, polyvinyl alcohol, polyacrylic acid (salt), and an alkali-soluble (meth)acrylic acid-(meth)acrylic acid ester copolymer; and a preservative. In the nonvolatile content of the positive electrode mixture, the other component is contained in an amount of preferably 0 mass% to 15 mass%, more preferably 0 mass% to 10 mass%.

The positive electrode mixture can be prepared, for example, by mixing the positive electrode active material, the conductivity aid, the binder, the solvent, and the optional other component, and dispersing the mixture using a beads mill, a ball mill, or an agitating mixer.

The positive electrode may be formed (coated) by any method. Examples of the method include: (1) a method of applying the positive electrode mixture to the positive electrode current collector (followed by drying) by a common coating method (e.g., a doctor blade method); (2) a method of immersing the positive electrode current collector in the positive electrode mixture (followed by drying); (3) a method of joining a sheet made of the positive electrode mixture to the positive electrode current collector (e.g., with a conductive adhesive) and pressing (and drying) the sheet; (4) a method of applying or casting the positive electrode mixture to which a liquid lubricant has been added onto the positive electrode current collector, forming the positive electrode mixture into a desired shape, and then removing the liquid lubricant (followed by extending the product uniaxially or multiaxially); and (5) a method of making the positive electrode mixture (or a solid content forming the positive electrode mixture layer) into slurry with an electrolyte solution, transferring the slurry in a semi-solid state to a current collector (the positive electrode current collector), and using the positive electrode mixture as an electrode (the positive electrode) without drying.

The positive electrode mixture layer thus formed or coated (applied) may be dried or pressed, if necessary.

(Negative Electrode)

The negative electrode includes a negative electrode current collector and a negative electrode mixture layer formed on the negative electrode current collector and is usually formed into a sheet shape.

Examples of metal used for the negative electrode current collector include iron, copper, aluminum, nickel, stainless steel (SUS), titanium, tantalum, gold, and platinum. Among them, copper is preferable. The shape and size of the

negative electrode current collector are not limited to particular ones.

The negative electrode mixture layer is made of a negative electrode mixture (a negative electrode composition). The negative electrode mixture contains components such as a negative electrode active material, a conductivity aid, a binder, and a solvent dispersing these components.

The negative electrode active material may be any known negative electrode active material used for various batteries (e.g., a lithium secondary battery) as long as the material can absorb and desorb lithium ions. A specific negative electrode active material can be graphite materials such as artificial graphite and natural graphite, a mesophase calcined body made from coal or petroleum pitches, carbon materials such as non-graphitizable carbon, a Si-based negative electrode material such as Si, a Si alloy, and SiO, a Sn-based negative electrode material such as a Sn alloy, and lithium alloys such as a lithium metal and a lithium-aluminum alloy. These negative electrode active materials may be used alone or in combination of two or more of them.

The negative electrode mixture may further include a conductivity aid (conductive material), a binder, a solvent, or the like. As the conductivity aid, the binder, the solvent, and the like, the same components as those described above can be used. These components are used in the same proportion as described above.

The negative electrode may be produced in the same manner as the positive electrode.

(Separator)

The secondary battery may include a separator. The separator is disposed to separate the positive electrode and the negative electrode from each other. The separator is not limited to a particular one, and any known separator can be used in the present disclosure. Specific examples of the separator include a porous sheet (e.g., a polyolefin-based microporous separator and a cellulose-based separator) formed of a polymer capable of absorbing and retaining an electrolyte solution (non-aqueous electrolyte solution), a nonwoven fabric separator, and a porous metal body.

Examples of the material of the porous sheet include polyethylene, polypropylene, and a laminate having a three layer structure of polypropylene, polyethylene, and polypropylene.

Examples of the material of the nonwoven fabric separator include cotton, rayon, acetate, nylon, polyester, polypropylene, polyethylene, polyimide, aramid, and glass. These materials may be used alone or in combination of two or more of them depending on the required mechanical strength.

(Battery Housing)

A battery element including the positive electrode, the negative electrode, and the non-aqueous electrolyte solution (and the separator) is usually contained in a battery housing to protect the battery element from external shocks and environmental degradation when the battery is in use. The battery housing is made of any material, and any known battery housing can be used.

If necessary, an expanded metal, a fuse, an overcurrent protection element such as a PTC element, or a lead plate may be placed in the battery housing to avoid an increase in internal pressure of the battery and excessive charge/discharge.

The battery (such as the lithium ion secondary battery) is not limited to have a particular shape, and may have any known shape such as a cylindrical shape, a rectangular shape, a laminate shape, a coin shape, and a large shape. When used as a high-voltage (e.g., tens to hundreds of volts) power supply to be mounted in an electric vehicle or a hybrid electric vehicle, for example, the batteries may be connected in series into a battery module.

The rated charging voltage of the secondary battery (such as the lithium ion secondary battery) is not limited to a particular value, and may be 3.6 V or more, preferably 4.0 V or more, more preferably 4.1 V or more, yet more preferably 4.2 V or more, when the secondary battery includes a positive electrode mainly containing the ternary positive electrode active material. Although the energy density increases as the rated charging voltage increases, the rated charging voltage may be 4.6 V or less (e.g., 4.5 V or less) in view of safety.

<Method of Manufacturing Secondary Battery>

The secondary battery of the present embodiment can be easily manufactured, for example, by joining a positive electrode and a negative electrode (with a separator interposed therebetween, if necessary), placing the obtained laminate in a battery housing, injecting a non-aqueous electrolyte solution into the battery housing, and sealing the battery housing.

## EXAMPLES

The present disclosure will be described below by way of examples. The present disclosure is not limited to the

following Examples.

<Preparation of Non-Aqueous Electrolyte Solution>

«Example 1»

To lithium bis(fluorosulfonyl)imide [$LiN(FSO_2)_2$, hereinafter referred to as "LiFSI," manufactured by Nippon Shokubai Co., Ltd.] as an electrolyte, 50 ppm by mass of methanol (super dehydrated, manufactured by Fujifilm Wako Pure Chemical Industries, Ltd.) was added as an additive (hydroxyl group-containing compound), and the mixture was then dissolved in dimethyl carbonate (hereinafter referred to as "DMC," LIB grade, manufactured by Kishida Chemical Co., Ltd.) as an electrolyte solution solvent to prepare a non-aqueous electrolyte solution having a LiFSI concentration of 2.91 mol/L (about 40 mass%). The non-aqueous electrolyte solution had an acid concentration (before storage, in terms of HF, the same applies hereinafter) of 1.5 ppm by mass measured by the method described below.

«Examples 2 and 3»

A non-aqueous electrolyte solution was prepared in the same manner as in Example 1 except that the amount of methanol added was changed to the content shown in Table 1. The acid concentration in the non-aqueous electrolyte solution was 2.9 ppm by mass in Example 2 and 2.5 ppm by mass in Example 3.

«Comparative Example 1»

A non-aqueous electrolyte solution was prepared in the same manner as in Example 1 except that methanol was not added. The acid concentration in the non-aqueous electrolyte solution was 0.9 ppm by mass.

<Evaluation of Non-Aqueous Electrolyte Solution>

Table 1 shows the LiFSI concentration, the type of the hydroxyl group-containing compound added, the amount (content) of the hydroxyl group-containing compound added relative to LiFSI, and the type of the electrolyte solution solvent of each of the non-aqueous electrolyte solutions obtained in Examples and Comparative Example. The concentrations of acid (in terms of HF), moisture, fluoride ions ($F^-$), sulfate ions ($SO_4^{2-}$), and hydroxyl group-containing compound contained in each of the electrolyte solutions stored at 40°C for three months in sealed containers made of PFA (fluorocarbon resin) were measured by the following measurement methods. Table 1 shows the results.

[Measurement of Acid Content]

Each of the non-aqueous electrolyte solutions was diluted 14.3 folds with ultrapure water (more than 18.2 Ω·cm) to prepare a measurement solution. The acid content of each non-aqueous electrolyte solution was measured by titration with a 0.01 N aqueous sodium hydroxide solution using COM-1700A (manufactured by HIRANUMA Co., Ltd.).

[Measurement of Moisture Content]

Karl Fischer Titrator AQ-2000 (manufactured by HIRANUMA Co., Ltd.) was used. The moisture content of each of the non-aqueous electrolyte solutions was measured using Aqualyte RS-A(manufactured by HIRANUMA Co., Ltd.) as a generator solution and Aqualyte CN (manufactured by HIRANUMA Co., Ltd.) as a counter solution.

[Measurement by Ion Chromatography]

Each of the non-aqueous electrolyte solutions was diluted 100 folds with ultrapure water (more than 18.2 Ω·cm) to prepare a measurement solution. The concentrations of the fluoride ions and the sulfate ions contained in the non-aqueous electrolyte solution were measured using an ion chromatography system ICS-3000 (manufactured by Nippon Dionex K. K.). The measurement conditions are as follows.

(Conditions of Measurement by Ion Chromatography)

- Separation mode: Ion exchange

- Eluent: 4.5 mM $Na_2CO_3$/0.5 mM $NaHCO_3$ aqueous solution
- Detector: Electrical conductivity detector
- Column: Anion analysis column Ion PAC AS-23 (manufactured by Nippon Dionex K. K.)

[Measurement of Content of Hydroxyl Group-Containing Compound]

The amount of the hydroxyl group-containing compound contained in each of the non-aqueous electrolyte solutions was measured using a head space gas chromatography system SHIMADZU HS-GC20/GC-2010Plus (manufactured by Shimadzu Corporation).

(Measurement Conditions for Head Space Gas Chromatography)

- Detector: Flame ionization detector
- Separation column: Rtx-200 (manufactured by Restek Corporation)

The content of the hydroxyl group-containing compound can also be measured by $^1$H-NMR. For the $^1$H-NMR measurement, a system "Unity Plus-400" manufactured by Varian Inc. (internal reference material: trifluorotoluene, number of measurements: 64) was used.

[Table 1]

| | Electrolyte | Hydroxyl group-containing compound | | Electrolyte solution solvent | Concentrations of components in non-aqueous electrolyte solution after storage at 40°C for 3 months [ppm by mass] | | | | |
|---|---|---|---|---|---|---|---|---|---|
| | LiFSI [mol/L] | Type | Content relative to LiFSI [ppm by mass] | Type | Acid content (In terms of HF) | Moisture content | $F^-$ ions | $SO_4^{2-}$ ions | Hydroxyl group-containing compound (values in parentheses are concentrations relative to LiFSI) |
| Example 1 | 2.91 | Methanol | 50 | DMC | 27.4 | 28.9 | 18.3 | 21.2 | 16.8 (42) |
| Example 2 | 2.91 | Methanol | 125 | DMC | 10.0 | 32.6 | 13.3 | 7.1 | 44.3 (111) |
| Example 3 | 2.91 | Methanol | 250 | DMC | 5.8 | 29.8 | 10.1 | 1.7 | 102.5 (256) |
| Comparative Example 1 | 2.91 | Not added | 2 | DMC | 86.1 | 2.1 | 46.3 | 31.6 | 0.4 (1) |

Table 1 shows that each of the non-aqueous electrolyte solutions of Examples 1 to 3 containing 2.91 mol/L of LiFSI and a predetermined amount of methanol added as the hydroxyl group-containing compound generated less decomposition products of the acid, fluoride ions, and sulfate ions after storage at 40°C for three months as compared with the non-aqueous electrolyte solution of Comparative Example 1 to which no methanol was added. This indicates that the non-aqueous electrolyte solutions of Examples 1 to 3 containing more than 1.5 mol/L of LiFSI (sulfonylimide compound) and 40 ppm by mass or more and 1000 ppm by mass or less of methanol (hydroxyl group-containing compound) relative to LiFSI decomposed less LiFSI and had better storage stability as compared with the non-aqueous electrolyte solution of Comparative Example 1 that contains more than 1.5 mol/L of LiFSI and less than 40 ppm by mass of the hydroxyl group-containing compound.

«Examples 4 to 10 and Comparative Example 1»

A non-aqueous electrolyte solution was prepared in the same manner as in Example 1 except that the LiFSI concentration, the type and amount of the hydroxyl group-containing compound added (contained), and the type of the electrolyte solution solvent were changed to those shown in Table 2. The composition of Comparative Example 1 was the

same as the composition described above. The acid concentration in the non-aqueous electrolyte solution was 1.5 ppm by mass in Example 4, 2.9 ppm by mass in Example 5, 2.5 ppm by mass in Example 6, 4.2 ppm by mass in Example 7, 4.2 ppm by mass in Example 8, 6.7 ppm by mass in Example 9, 4.2 ppm by mass in Example 10, and 0.9 ppm by mass in Comparative Example 1.

The concentrations of acid (in terms of HF), moisture, fluoride ions ($F^-$), sulfate ions ($SO_4^{2-}$), and hydroxyl group-containing compound contained in each of the electrolyte solutions stored at 40°C for one month in sealed containers made of PFA were measured in the same manner as in Example 1. Table 2 shows the results. Note that "n. a." in Table 2 indicates that the concentration was less than the lower detection limit of the measuring device.

[Table 2]

| | Electrolyte | Hydroxyl group-containing compound | | Electrolyte solution solvent | Concentrations of components in non-aqueous electrolyte solution after storage at 40°C for 1 month ppm by mass] | | | | |
|---|---|---|---|---|---|---|---|---|---|
| | LiFSI [mol/L] | Type | Content relative to LiFSI [ppm by mass] | Type | Acid content (In terms of HF) | Moisture content | $F^-$ ions | $SO_4^{2-}$ ions | Hydroxyl group-containing compound (values in parentheses are concentrations relative to LiFSI) |
| Example 4 | 2.91 | Methanol | 50 | DMC | 3.7 | 31.7 | 7.1 | 4.7 | 26.6 (67) |
| Example 5 | 2.91 | Methanol | 125 | DMC | 2.7 | 29.8 | 8.4 | 1.1 | 54.5 (136) |
| Example 6 | 2.91 | Methanol | 250 | DMC | 2.5 | 27.9 | 8.6 | n. a. | 102 (256) |
| Example 7 | 2.91 | Ethanol | 250 | DMC | 9.9 | 53.2 | 14.1 | 10.7 | 98.9 (247) |
| Example 8 | 2.91 | Ethylene glycol | 250 | DMC | 8.9 | 44.0 | 13.5 | 11.1 | - |
| Example 9 | 2.91 | Hydroquinone | 250 | DMC | 7.1 | 68.0 | 12 | n. a. | 154 (386) |
| Example 10 | 2.91 | Dibutylhydroxytoluene | 250 | EMC | 6.5 | 38.1 | 12.3 | 5.9 | 91.8 (230) |
| Comparative Example 1 | 2.91 | Not added | 2 | DMC | 14.5 | 25.5 | 10.1 | 17.9 | 1.1 (2.9) |

Table 2 shows that each of the non-aqueous electrolyte solutions of Examples 7 to 10 containing a predetermined amount of ethanol or ethylene glycol (alcohol), or a predetermined amount of hydroquinone or dibutylhydroxytoluene (a phenolic hydroxyl group-containing compound) added as the hydroxyl group-containing compound in place of methanol generated less decomposition products of LiFSI such as the acid and the sulfate ions after storage at 40°C for one month as compared with the non-aqueous electrolyte solution of Comparative Example 1 to which no hydroxyl group-containing compound was added. From the results, it is expected that the non-aqueous electrolyte solutions of Examples 4 to 10 generate less decomposition products after storage at 40°C for three months than the non-aqueous electrolyte solution of Comparative Example 1, as indicated by the results of Table 1.

«Examples 11 and 12 and Comparative Example 2»

From the studies so far, the inventors of the present application have found that a battery using a non-aqueous electrolyte solution containing a sulfonylimide compound such as LiFSI as an electrolyte causes larger self-discharge from a fully charged state than a battery using a non-aqueous electrolyte solution containing a lithium compound alone (e.g., $LiPF_6$ or $LiBF_4$) other than the sulfonylimide compound as the electrolyte, and that there is room for improvement in storage characteristics of the battery. Thus, the inventors have examined various techniques for the improvement. In the following examples, it was checked whether the self-discharge of the battery during storage was reduced by adding the hydroxyl group-containing compound to the non-aqueous electrolyte solution containing the sulfonylimide compound.

(1) Preparation of Evaluation Battery

- Commercially available $LiFePO_4$ as a positive electrode active material, acetylene black (HS-100), and PVdF (Kureha #L7208) were weighed at a composition (mass) ratio of 100:9:6 and dispersed in N-methyl-2-pyrrolidone (NMP) to prepare slurry. The prepared slurry was applied to one surface of an aluminum foil (in an application amount of 20.20 mg/cm$^2$), dried, and roll-pressed to produce a positive electrode.
- Graphite (O-MAC, manufactured by Osaka Gas Chemicals Co., Ltd.) as a negative electrode active material, carbon nanotubes (VGCF, manufactured by Showa Denko Corp.) as a conductivity aid, and styrene-butadiene rubber (SBR) and carboxymethyl cellulose (CMC) as binders were used to prepare aqueous slurry having composition (mass ratio) of graphite:VGCF:SBR:CMC = 100:2:1.5:1.5. The prepared slurry was applied to one surface of a copper foil in an application amount of 8.8 mg/cm$^2$, dried, and roll-pressed to produce a negative electrode.
  The obtained positive and negative electrodes were cut to the size of 3 cm x 4 cm, and a polar lead was ultrasonically welded to each of the cut positive and negative electrodes. The electrodes were disposed opposite to each other with a 20-μm polyethylene (PE) separator interposed therebetween, put in an exterior package, and sealed at three sides by lamination. Thus, cells were produced. The electrolyte solutions shown in Table 3, 700 μL each, were injected into the obtained cells from one unsealed side.
- As an electrolyte solution of Comparative Example 2, a solution prepared by dissolving 1.51 mol/L of LiFSI in a mixture solvent of EC/DMC = 3/7 (wt/wt) was used. As electrolyte solutions of Examples 11 and 12, a solution prepared by adding 250 ppm by mass of methanol relative to LiFSI to the electrolyte solution of Comparative Example 2 and a solution prepared by adding 1000 ppm by mass of methanol relative to LiFSI to the electrolyte solution of Comparative Example 2 were used.
- The cells after the injection of the electrolyte solution were charged at a constant current of 5 mA for three hours, and one side of the cell was torn for degassing by vacuum sealing again. The degassed cells were stored at 25°C for 48 hours, and then charged and discharged under the following conditions to complete the evaluation batteries.

(Conditioning Conditions)

First cycle charge: charge at a constant current of 2.5 mA and a constant voltage of 3.6 V to a cutoff current of 0.25 mA
Discharge: discharge at 5 mA to a cutoff voltage of 2.0 V
Second cycle charge: charge at a constant current of 2.5 mA and a constant voltage of 3.6 V to a cutoff current of 0.5 mA
Discharge: discharge at 5 mA to a cutoff voltage of 2.0 V
Third cycle charge: charge at a constant current of 2.5 mA and a constant voltage of 3.6 V to a cutoff current of 0.5 mA
Discharge: discharge at 25 mA to a cutoff voltage of 2.0 V

(2) Evaluation of Characteristics of Evaluation Battery

The self-discharge capacity rate after high-temperature storage was measured by the following method using the evaluation battery obtained in the item (1) above. Table 3 shows the results.

<Measurement of Self-Discharge Capacity Rate after High-Temperature Storage>

The amount of self-discharge of the battery was calculated as a self-discharge capacity rate after storage at 80°C for seven days (high-temperature storage) by the following mathematical equation (1). The smaller the value of the self-discharge capacity rate, the more the self-discharge of the battery is reduced.

Self-discharge capacity rate = 100 $\times$ {(discharge capacity before storage) - (discharge capacity after storage)}/(discharge capacity before storage) (1) [Mathematical 1]

(Discharge Capacity before Storage)

The evaluation battery was charged and discharged under the following conditions (25°C) to check the discharge capacity before storage.

- Charge: charge at a constant current of 2.5 mA and a constant voltage of 3.6 V to a cutoff current of 0.5 mA $\rightarrow$ discharge at a constant current of 2.5 mA to a cutoff voltage of 2.0 V

(Discharge Capacity after Storage)

The evaluation battery after the check of the discharge capacity before storage was fully charged at a constant current of 1 C (25 mA) and a constant voltage of 3.6 V at room temperature to a cutoff current of 0.02 C (0.5 mA) and stored at 80°C for seven days. The discharge capacity after the high-temperature storage was obtained by discharging the battery after the storage at a constant current of 2.5 mA at 25°C to a cutoff voltage of 2.0 V.

[Table 3]

| | Electrolyte Solution Solvent | LiFSI [mol/L] | Hydroxyl group-containing compound | | Self-Discharge capacity rate (%) |
|---|---|---|---|---|---|
| | | | Type | Content relative to LiFSI [ppm by mass] | |
| Comparative Example 2 | EC:DMC = 3:7 | 1.51 | Not added | 4 | 40.5 |
| Example 11 | | | Methanol | 250 | 33.4 |
| Example 12 | | | | 1000 | 36.2 |

The results shown in Table 3 indicate that both of Examples 11 and 12 using the non-aqueous electrolyte solutions containing more than 1.5mol/L of LiFSI (sulfonylimide compound) and 40 ppm by mass or more and 1000 ppm by mass or less of methanol added as the hydroxyl group-containing compound relative to LiFSI had the lower self-discharge capacity rate after storage at 80°C for seven days and reduced the self-discharge of the battery as compared with Comparative Example 1 using the non-aqueous electrolyte solution with no methanol added (the content of methanol is less than 40 ppm by mass).

## Claims

**1.** A non-aqueous electrolyte solution comprising:

a sulfonylimide compound represented by the general formula (1); and
at least one hydroxyl group-containing compound selected from the group consisting of alcohol and a phenolic hydroxyl group-containing compound, wherein
the non-aqueous electrolyte solution contains more than 1.5 mol/L of the sulfonylimide compound represented by the general formula (1) and 40 ppm by mass or more and 1000 ppm by mass or less of the hydroxyl group-containing compound relative to the sulfonylimide compound represented by the general formula (1):

$LiN(RSO_2)(FSO_2)$ (where R represents a fluorine atom, an alkyl group with 1 to 6 carbon atoms, or a fluoroalkyl group with 1 to 6 carbon atoms) (1);
the content of sulfonylimide compound (1) in the non-aqueous electrolyte solution is 50 mol% or more relative to the total of 100mol% of the electrolyte contained in the non-aqueous electrolyte solution;
the alcohol includes at least one selected from the group consisting of aliphatic monoalcohol with 1 to 4 carbon atoms and aliphatic dialcohol with 1 to 4 carbon atoms;
the aliphatic monoalcohol with 1 to 4 carbon atoms are methanol, ethanol, n-propyl alcohol, isopropyl alcohol, n-butyl alcohol, and t-butyl alcohol;
the aliphatic dialcohol with 1 to 4 carbon atoms are ethylene glycol and propylene glycol.

**2.** The non-aqueous electrolyte solution of claim 1, wherein
the non-aqueous electrolyte solution contains HF at a concentration of 50 ppm by mass or less, the HF content being measured by titration with a 0.01 N aqueous sodium hydroxide solution.

**3.** The non-aqueous electrolyte solution of claim 1 or 2, wherein
the sulfonylimide compound represented by the general formula (1) contains $LiN(FSO_2)_2$.

**4.** The non-aqueous electrolyte solution of any one of claims 1 to 3, wherein
the phenolic hydroxyl group-containing compound includes at least one selected from the group consisting of hydroquinone and dibutylhydroxytoluene.

**5.** The non-aqueous electrolyte solution of any one of claims 1 to 4, further comprising
at least one selected from the group consisting of a carbonate solvent, a lactone solvent, an ether solvent, and a chain ester solvent as an electrolyte solution solvent.

**6.** A method for storing the non-aqueous electrolyte solution of any one of claims 1 to 5 in a container.

**7.** The method of claim 6, wherein
the non-aqueous electrolyte solution after storage at room temperature or higher for three months or longer contains HF at a concentration of 50 ppm by mass or less, the HF content being measured by titration with a 0.01 N aqueous sodium hydroxide solution.

**8.** A secondary battery using the non-aqueous electrolyte solution of any one of claims 1 to 5.

## Patentansprüche

**1.** Nichtwässrige Elektrolytlösung, umfassend:

eine Sulfonylamidverbindung, dargestellt durch die allgemeine Formel (1);
und
zumindest eine eine Hydroxylgruppe enthaltende Verbindung, ausgewählt aus der Gruppe bestehend aus Alkohol und eine eine Hydroxylgruppe enthaltenden phenolischen Verbindung, wobei
die nichtwässrige Elektrolytlösung mehr als 1,5 mol/l der durch die allgemeine Formel (1) dargestellten Sulfonylamidverbindung und 40 Massen-ppm oder mehr und 1000 Massen-ppm oder weniger der eine Hydroxylgruppe enthaltenden Verbindung relativ zu der durch die allgemeine Formel (1) dargestellten Sulfonylimidverbindung enthält:

$LiN(RSO_2)(FSO_2)$ (wobei R ein Fluoratom, eine Alkylgruppe mit 1 bis 6 Kohlenstoffatomen oder eine Fluoralkylgruppe mit 1 bis 6 Kohlenstoffatomen darstellt) (1);
der Gehalt an Sulfonylamidverbindung (1) in der nichtwässrigen Elektrolytlösung 50 Mol-% oder mehr relativ zu den insgesamt 100 Mol-% des in der nichtwässrigen Elektrolytlösung enthaltenen Elektrolyts beträgt;
der Alkohol zumindest einen ausgewählt aus der Gruppe bestehend aus aliphatischem Monoalkohol mit 1 bis 4 Kohlenstoffatomen und aliphatischem Dialkohol mit 1 bis 4 Kohlenstoffatomen beinhaltet;
der aliphatische Monoalkohol mit 1 bis 4 Kohlenstoffatomen Methanol, Ethanol, n-Propylalkohol, Isopropylalkohol, n-Butylalkohol und t-Butylalkohol sind;
der aliphatische Dialkohol mit 1 bis 4 Kohlenstoffatomen Ethylenglykol und Propylenglykol sind.

**2.** Nichtwässrige Elektrolytlösung nach Anspruch 1, wobei die nichtwässrige Elektrolytlösung HF in einer Konzentration von 50 Massen-ppm oder weniger enthält, wobei der HF-Gehalt durch Titration mit einer 0,01 N wässrigen Natriumhydroxidlösung gemessen wird.

**3.** Nichtwässrige Elektrolytlösung nach Anspruch 1 oder 2, wobei die durch die allgemeine Formel (1) dargestellte Sulfonylamidverbindung $LiN(FSO_2)_2$ enthält.

**4.** Nichtwässrige Elektrolytlösung nach einem der Ansprüche 1 bis 3, wobei Die eine Hydroxylgruppe enthaltende phenolische Verbindung zumindest eine ausgewählt aus der Gruppe bestehend aus Hydrochinon und Butylhydroxytoluol beinhaltet.

**5.** Nichtwässrige Elektrolytlösung nach einem der Ansprüche 1 bis 4, weiter umfassend: zumindest eines, ausgewählt aus der Gruppe bestehend aus einem Carbonatlösemittel, einem Lactonlösemittel, einem Etherlösemittel und einem Kettenesterlösemittel als Elektrolytlösungslösemittel.

**6.** Verfahren zum Aufbewahren der nichtwässrigen Elektrolytlösung nach einem der Ansprüche 1 bis 5 in einem Behälter.

**7.** Verfahren nach Anspruch 6, wobei die nichtwässrige Elektrolytlösung nach einer Lagerung bei Raumtemperatur oder höher für drei Monate oder länger **HF** in einer Konzentration von 50 Massen-ppm oder weniger enthält, wobei der HF-Gehalt durch Titration mit einer 0,01 N wässrigen Natriumhydroxidlösung gemessen wird.

**8.** Sekundärbatterie unter Verwendung der nichtwässrigen Elektrolytlösung nach einem der Ansprüche 1 bis 5.

**Revendications**

**1.** Solution électrolytique non aqueuse comprenant :

un composé sulfonylimide représenté par la formule générale (1) ; et
au moins un composé contenant un groupe hydroxyle choisi dans le groupe constitué d'un alcool et d'un composé contenant un groupe hydroxyle phénolique, dans laquelle
la solution électrolytique non aqueuse contient plus de 1,5 mol/L du composé sulfonylimide représenté par la formule générale (1) et 40 ppm en masse ou plus et 1000 ppm en masse ou moins du composé contenant un groupe hydroxyle par rapport au composé sulfonylimide représenté par la formule générale (1) :

$LiN(RSO_2)(FSO_2)$ (où R représente un atome de fluor, un groupe alkyle ayant 1 à 6 atomes de carbone ou un groupe fluoroalkyle ayant 1 à 6 atomes de carbone) (1) ;
la teneur en composé sulfonylimide (1) dans la solution électrolytique non aqueuse est de 50% en moles ou plus par rapport au total de 100% en moles de l'électrolyte contenu dans la solution électrolytique non aqueuse ;
l'alcool comprend au moins un choisi dans le groupe constitué d'un monoalcool aliphatique ayant 1 à 4 atomes de carbone et d'un dialcool aliphatique ayant 1 à 4 atomes de carbone ;
les monoalcools aliphatiques ayant 1 à 4 atomes de carbone sont le méthanol, l'éthanol, l'alcool n-propylique, l'alcool isopropylique, l'alcool n-butylique et l'alcool t-butylique ;
les dialcools aliphatiques ayant 1 à 4 atomes de carbone sont l'éthylène glycol et le propylène glycol.

**2.** Solution électrolytique non aqueuse selon la revendication 1, dans laquelle la solution électrolytique non aqueuse contient du HF à une concentration inférieure ou égale à 50 ppm en masse, la teneur en HF étant mesurée par titrage avec une solution aqueuse d'hydroxyde de sodium 0,01 N.

**3.** Solution électrolytique non aqueuse selon la revendication 1 ou 2, dans laquelle le composé sulfonylimide représenté par la formule générale (1) contient $LiN(FSO_2)_2$.

**4.** Solution électrolytique non aqueuse selon l'une quelconque des revendications 1 à 3, dans laquelle le composé contenant un groupe hydroxyle phénolique comprend au moins un choisi dans le groupe constitué par l'hydroquinone et le dibutylhydroxytoluène.

**5.** Solution électrolytique non aqueuse selon l'une quelconque des revendications 1 à 4, comprenant en outre au moins un choisi dans le groupe constitué par un solvant carbonate, un solvant lactone, un solvant éther et un solvant ester à chaîne en tant que solvant de solution électrolytique.

**6.** Procédé de stockage de la solution électrolytique non aqueuse selon l'une quelconque des revendications 1 à 5 dans un récipient.

**7.** Procédé selon la revendication 6, dans lequel la solution électrolytique non aqueuse, après stockage à une température supérieure ou égale à la température ambiante pendant trois mois ou plus, contient du HF à une concentration inférieure ou égale à 50 ppm en masse, la teneur en HF étant mesurée par titrage avec une solution aqueuse d'hydroxyde de sodium 0,01 N.

**8.** Batterie secondaire utilisant la solution électrolytique non aqueuse selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007165294 A
- WO 2006057447 A
- WO 2020241438 A
- JP 2019114346 A
- JP H08203561 A
- JP 2016134283 A